# EUROPÄISCHE PATENTSCHRIFT

(11) **EP 3 386 831 B1**
(45) Veröffentlichungstag und Bekanntmachung des Hinweises auf die Patenterteilung: **01.04.2020**
(21) Anmeldenummer: 17704690.1
(22) Anmeldetag: 02.02.2017
(51) Int. Cl.: B61D 17/02, B61D 17/12

(54) **EISENBAHN-TRIEBFAHRZEUG MIT DACHÜBERGANGSELEMENT**
RAILWAY TRACTION VEHICLE WITH ROOF JOINT ELEMENT
VÉHICULE AUTOMOTEUR FERROVIAIRE À ÉLÉMENT DE TRANSITION DE TOIT

(30) Priorität: 30.03.2016 DE 102016205215
(43) Veröffentlichungstag der Anmeldung: 17.10.2018
(73) Patentinhaber: Siemens Mobility GmbH, 81739 München (DE)
(72) Erfinder: KROISS, Manuel, 85258 Ebersbach (DE); KÖRNER, Marcus, 85244 Grossinzemoos (DE); PEER, Hannes, 80809 München (DE)
(86) Internationale Anmeldenummer: PCT/EP2017/052292
(87) Internationale Veröffentlichungsnummer: WO 2017/167475

(56) Entgegenhaltungen:
- EP-A1- 0 616 935
- EP-A1- 1 566 322
- JP-A- H11 321 640

## Beschreibung

Die Erfindung betrifft ein Eisenbahn-Triebfahrzeug nach dem Oberbegriff des Patentanspruches 1.

Eisenbahn-Triebfahrzeuge sind elektrisch oder dieselelektrisch getriebene Schienenfahrzeuge, an welche ein zu ziehender Wagenzug von Eisenbahn-Wagen, etwa Personen- oder Güterwagen ankuppelbar ist. Während Triebköpfe speziell auf das Querschnittsprofil des gesamten Triebzuges abgestimmt sind, kann es bei den vielseitiger eisetzbaren Lokomotiven hinsichtlich des zu ziehenden Wagenzuges zu unterschiedlichsten Kombinationen kommen. Je nachdem, ob der angekuppelte Wagenzug beispielsweise aus einstöckigen oder zweistöckigen Personenwagen besteht, können zwischen einer Fahrzeughöhe der Lokomotive und einer Wagenhöhe der Personenwagen kaum oder aber auch erhebliche Höhenunterschiede auftreten. Bei einer Fahrzeughöhe einer Lokomotive von beispielsweise 4,2 m und einer Wagenhöhe eines Doppelstockwagens von beispielsweise 4,6 m kann der Höhenunterschied 0,4 m betragen. Besonders bei hohen Fahrgeschwindigkeiten würde sich ein großer Höhenunterschied, um den eine Wagenhöhe die Fahrzeughöhe übersteigt, auf Aerodynamik und Design der Triebfahrzeug-Wagen-Kombination nachteilig auswirken.

Um diese Nachteile zu umgehen, legt die aus Triebzügen bekannte Gestaltung nahe, das Querschnittsprofil des Fahrzeugkastens einer Lokomotive an das Querschnittsprofil des Wagenkastens des im vorgesehenen Betrieb der Lokomotive zu ziehenden Wagenzuges anzupassen. Die Bereitstellung von Triebfahrzeugen mit unterschiedlichen Querschnittsprofilen der Fahrzeugkästen ist für den Betreiber einer Fahrzeugflotte sehr aufwändig.

Derartige Ausgestaltungen sind beispielsweise bekannt aus den Druckschriften EP 1 566 322 A1, EP 0 616 935 A1 und JP 11 321 640 A.

Der Erfindung liegt die Aufgabe zugrunde, ein Eisenbahn-Triebfahrzeug der eingangs genannten Art bereitzustellen, welches den beschriebenen Nachteilen mit geringerem Aufwand begegnet.

Die Aufgabe wird erfindungsgemäß gelöst durch die Merkmale des-Patentanspruchs 1.

Ein Eisenbahn-Triebfahrzeug, insbesondere Lokomotive, zum Ziehen von mindestens einem ankuppelbaren Eisenbahn-Wagen, der einen Wagenkasten mit einem eine Wagenhöhe definierenden Wagendach aufweist, umfasst einen Fahrzeugkasten mit einem eine Fahrzeughöhe definierenden Fahrzeugdach. Die Fahrzeughöhe ist kleiner als die Wagenhöhe. An einem heckseitigen Endbereich des Fahrzeugkastens ist ein Dachübergangselement angeordnet, dessen Querschnittsprofil sich von seiner Vorderkante, welche einer Umrisslinie des Fahrzeugdachs folgt, bis zu seiner Hinterkante, welche einer Umrisslinie des Wagendachs folgt, erweitert. Das Dachübergangselement ist aus einem Satz von mehreren, unterschiedlichen Eisenbahn-Wagen zugeordneten Dachübergangselementen auswählbar. Das Dachübergangselement ist demontierbar am Fahrzeugdach befestigt.

Das Dachübergangselement ist vorzugsweise flächig ausgebildet und weist eine Form auf, die eine verwirbelungsarme Strömungsführung des Fahrtwindes vom Triebfahrzeug zum Wagen ermöglicht. Das aerodynamische vorteilhafte Dachübergangselement ist bei sonst unverändertem Triebfahrzeug mit geringem Aufwand herstell- und montierbar und begünstigt einen energieeffizienten und geräuscharmen Fahrbetrieb. Der Übergang zwischen Triebfahrzeug und erstem angekuppelten Wagen kann mittels des Dachübergangselements auch optisch ansprechender gestaltet werden. So können die Außenflächen des Dachübergangselements mit derselben Lackierung versehen sein wie der übrige Fahrzeugkasten.

In einer vorteilhaften Ausführungsform des erfindungsgemäßen Eisenbahn-Triebfahrzeugs ist die Profilerweiterung des Dachübergangelementes stetig ausgebildet. Unter stetig wird hier eine sprung- oder stufenlose Erweiterung des Querschnittprofils von der Vorderkante des Dachübergangselementes bis zu seiner Hinterkante verstanden. Insbesondere weist hier das Dachübergangselement eine durchgehende, geschlossene Außenfläche auf, an welcher der im Betrieb vorbeiströmende Fahrtwind kaum Turbulenzen ausbildet.

In einer bevorzugten Ausgestaltung des erfindungsgemäßen Eisenbahn-Triebfahrzeugs ist die Profilerweiterung des Dachübergangelementes glatt ausgebildet. Unter glatt wird hier eine knick- oder kantenfreie Erweiterung des Querschnittprofils von der Vorderkante des Dachübergangselementes bis zu seiner Hinterkante verstanden. Allenfalls bilden der Übergang vom Fahrzeugdach zum Dachübergangselement an dessen Vorderkante und/oder der Abschluss des Dachübergangselements an dessen Hinterkante einen leichten Knick in der Profilerweiterung aus. Insgesamt wird aber eine weitestgehend laminare Strömung des Fahrtwindes erzielt.

Der Dachübergangselemente-Satz besteht aus mehreren Dachübergangselementen, von welchen jedes an ein anderes Wagendach mit jeweils vorgegebener Wagenhöhe und Umrisslinie angepasst ist. Hierdurch kann von einer Triebfahrzeug-Plattform ausgegangen werden, deren Triebfahrzeuge sich dadurch unterscheiden, ob überhaupt ein Dachübergangselement und, falls erforderlich, welches der Dachübergangselemente auf dem Fahrzeugdach zu befestigen ist.

Eine zerstörungsfreie Austauschbarkeit des Dachübergangselements kann beispielsweise durch eine Befestigung mittels Schraubverbindungen ermöglicht werden. Soll das Triebfahrzeug vor einen anderen Wagenzug geringerer oder größerer Wagenhöhe gekuppelt werden, so kann das Dachübergangselement entfernt oder gegen ein dem anderen Eisenbahn-Wagen zugeordnetes Dachübergangselement aus dem Dachübergangselemente-Satz ersetzt werden.

In einer weiteren vorteilhaften Ausführungsform des erfindungsgemäßen Eisenbahn-Triebfahrzeugs sind Anbauteile und Anschlüsse außerhalb des vom Dachübergangselement überdeckten Endbereichs des Fahrzeugkastens angeordnet. Indem Zugkupplungen, Aufstiege, Kupplungsdosen für elektrische Versorgungs- und Kommunikationsleitungen, Heckleuchten, Antennen, Druckluftanschlüsse, Lüftungsgitter und dergleichen nicht in dem heckseitigen Endbereich des Fahrzeugkastens angeordnet sind, der vom Dachübergangselement überdeckbar ist, kann das erfindungsgemäße Triebfahrzeug mit und ohne Dachübergangselement betrieben werden.

Weitere Eigenschaften und Vorteile der Erfindung ergeben sich aus nachfolgender Beschreibung eines konkreten Ausführungsbeispiels anhand der Zeichnungen, in deren
- FIG 1: ein erfindungsgemäßes Eisenbahn-Triebfahrzeug ohne Dachübergangselement in perspektivischer Ansicht,
- FIG 2: ein heckseitiger Endbereich des Eisenbahn-Triebfahrzeuges aus FIG 1 mit montiertem Dachübergangselement und
- FIG 3: im Dachbereich der Übergang vom Eisenbahn-Triebfahrzeug aus FIG 2 zu einem von diesem gezogenen Eisenbahn-Wagen in einer Seitenansicht
schematisch veranschaulicht sind.

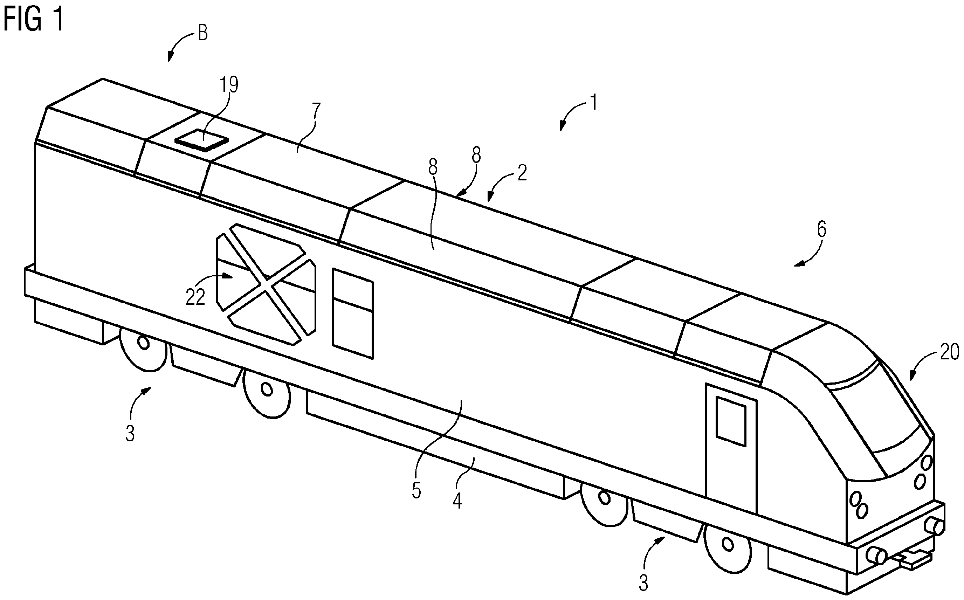

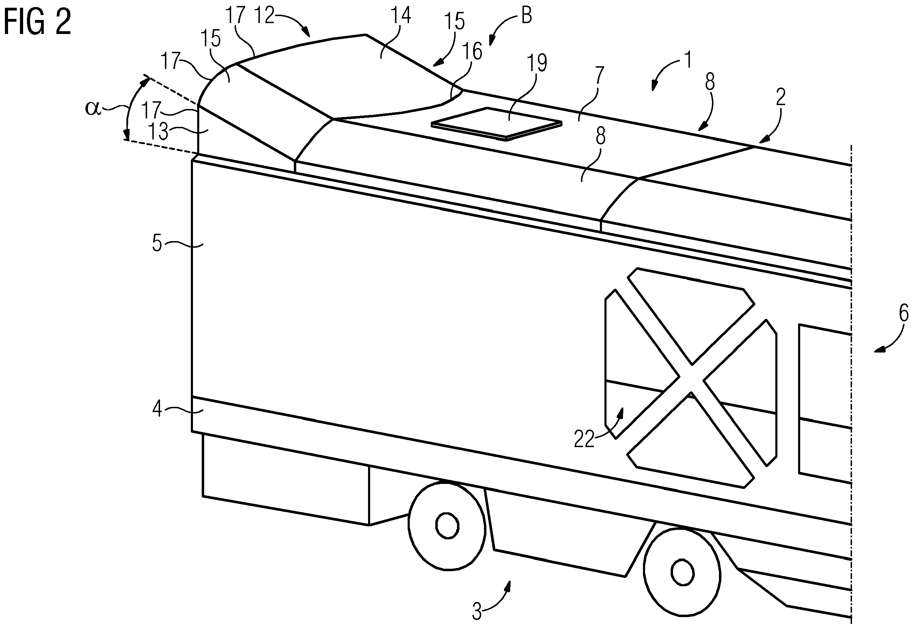

Gemäß FIG 1 bis FIG 3 weist ein als dieselelektrische Lokomotive 1 ausgebildetes Eisenbahn-Triebfahrzeug einen Fahrzeugkasten 2 auf, der auf zwei längs eines Fahrgleises verfahrbaren Drehgestellen 3 federnd lagert. Der Fahrzeugkasten 2 umfasst ein Untergestell 4, zwei von diesem emporragende Seitenwände 5 sowie ein eine Fahrzeughöhe h über eine Schienenoberkante definierendes Fahrzeugdach 6. Am bugseitigen Ende des Fahrzeugkastens 2 befindet sich ein Führerstand 20, während das heckseitige Ende des Fahrzeugkastens 2 durch eine Rückwand 21 verschlossen ist. Im Fahrzeugkasten 2 befindet sich hinter dem Führerstand 20 ein Maschinenraum 22 mit an sich bekannten Komponenten, wie Dieselmotor, Dieseltank, Abgasnachbehandlungskomponenten, Kühlanlage, Generator, Stromrichter sowie Brems-, Druckluft- und Hilfsbetriebegerüsten. Das Fahrzeugdach 6 weist einen im Wesentlichen ebenen Mittelteil 7 und zwei sich an den Mittelteil 7 anschließende schräg nach unten ausgestellte Seitenteile 8 auf, die an die Seitenwände 5 stoßen.

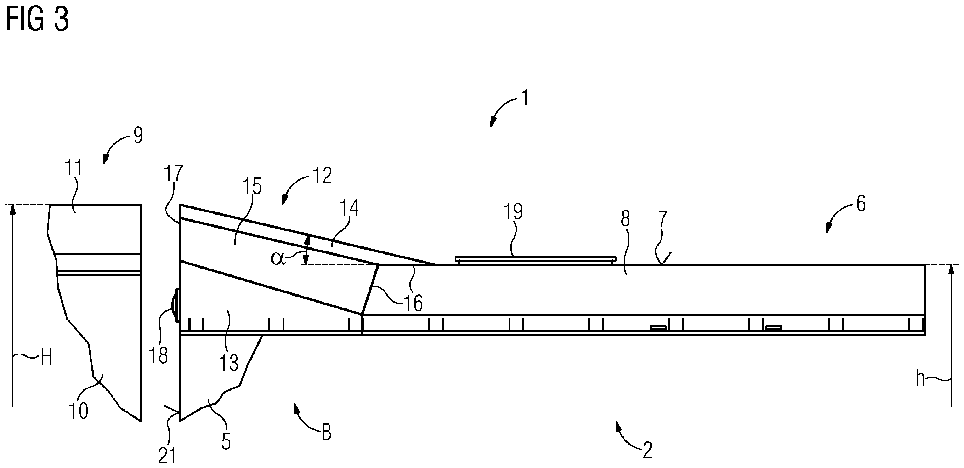

Die Lokomotive 1 ist gemäß FIG 3 zum Ziehen eines Wagenzuges aus als Doppelstockwagen 9 ausgebildeten Eisenbahn-Wagen vorgesehen. Jeder Doppelstockwagen 9 weist einen Wagenkasten 10 mit einem eine Wagenhöhe H definierenden Wagendach 11 auf. Da die Wagenhöhe H im dargestellten Ausführungsbeispiel die Fahrzeughöhe h deutlich übersteigt, beispielsweise um 0,4 m, ist zur Vermeidung von ungünstigen aerodynamischen Verhältnissen erfindungsgemäß ein Dachübergangselement 12 in einem heckseitigen Endbereich B des Fahrzeugkastens 2 angeordnet.

Das Dachübergangselement 12 kann als flächiges, u-förmig gebogenes Aluminium- oder Stahlblechteil ausgeführt sein, welches mit seiner offenen Seite nach unten gewandt auf dem Fahrzeugdach 6 sitzt und dort mittels Schraubverbindungen lösbar befestigt ist. Das Dachübergangselement 12 weist demnach zwei dreieck- oder trapezförmige Seitenabschnitte 13 auf, die vertikal ausgerichtet sind und mit den Seitenwänden 5 des Fahrzeugkastens 2 fluchten. Ferner weist das Dachübergangselement 12 einen den Mittelteil 7 des Fahrzeugdaches 6 überdeckenden Mittelabschnitt 14 auf, der gegen den horizontal ausgerichteten Mittelteil 7 um einen Anstellwinkel α geneigt angeordnet ist. Schließlich weist das Dachübergangselement 12 zwei bogenförmige Übergangsabschnitte 15 auf, die oberhalb der Seitenteile 8 des Fahrzeugdaches 6 verlaufen und den Mittelabschnitt 14 mit den Seitenabschnitten 13 verbinden. Eine Vorderkante 16 des Dachübergangselementes 12 folgt dabei einer Umrisslinie des Querschnittprofils des Fahrzeugkastens 2, während eine Hinterkante 17 des Dachübergangselementes 12 einer Umrisslinie des Querschnittprofils des Wagenkastens 10 des an die Lokomotive 1 angekuppelten Doppelstockwagens 9 folgt. Durch die geneigte Anordnung des Mittelabschnitts 14 und der Seitenabschnitte 13 ergibt sich eine stetige, glatte Profilerweiterung des Dachübergangselementes 12 von seiner Vorderkante 16 bis hin zu seiner mit der Rückwand 21 des Fahrzeugkastens 2 fluchtenden Hinterkante 17. Der im Fahrbetrieb auftretende Fahrtwind strömt vom Fahrzeugkasten 2 der Lokomotive 1 über das Dachübergangselement 12 ohne Bildung großer Verwirbelungen zum Wagenkasten 10 des Doppelstockwagens 9 weiter. Das erfindungsgemäße Dachübergangselement 12 verringert den Strömungswiderstand im Übergangsbereich von Lokomotive 1 zum ersten Doppelstockwagen 9 und führt somit zu geringeren Traktionsenergieverlusten und zu verminderten Fahrgeräuschen. Außerdem bildet das Dachübergangselement 12 einen sanfteren optischen Übergang und bietet dadurch auch Vorteile für das Fahrzeugdesign.

Ein weiterer Vorteil der erfindungsgemäßen Lokomotive 1 besteht in der einfachen Umrüstbarkeit, wenn der Betreiber die Lokomotive 1 zum Ziehen eines anderen Wagenzuges mit geringerer oder größerer Wagenhöhe H als bislang einsetzen möchte. Dem Betreiber kann hier ein Satz von mehreren, unterschiedlichen Eisenbahn-Wagen zugeordneten Dachübergangselementen 12 bereitgestellt werden. Die Dachübergangselemente 12 sind hinsichtlich des Anstellwinkels α an die Wagenhöhen H und hinsichtlich des Verlaufs der Hinterkante 17 an die Umrisslinie des Wagendaches 11 angepasst. Die Dachübergangselemente 12 können sich auch durch ihre Länge unterscheiden. Damit die Lokomotive 1 sowohl ohne als auch mit einem Dachübergangselement 12 des bereitgestellten Dachübergangselemente-Satzes problemlos betrieben werden kann, sind Anbauteile und Anschlüsse, wie zum Beispiel Zugkupplungen, Aufstiege, Kupplungsdosen für elektrische Versorgungs- und Kommunikationsleitungen, Heckleuchten 18, Antennen, Druckluftanschlüsse, Lüftungsgitter 19 und dergleichen, außerhalb des vom Dachübergangselement 12 überdeckten Endbereichs B des Fahrzeugkastens 2 angeordnet. Hierdurch kann bei der erfindungsgemäßen Lokomotive 1 von einer Plattform-Lokomotive ausgegangen werden, die sich je nach Einsatz nur dadurch unterscheidet, ob überhaupt ein Dachübergangselement 12 und, falls erforderlich, welches der Dachübergangselemente 12 auf dem Fahrzeugdach 6 zu befestigen ist.

## Patentansprüche

1. Eisenbahn-Triebfahrzeug, insbesondere Lokomotive (1), zum Ziehen von mindestens einem ankuppelbaren Eisenbahn-Wagen, der einen Wagenkasten (10) mit einem eine Wagenhöhe (H) definierenden Wagendach (11) aufweist, umfassend einen Fahrzeugkasten (2) mit einem eine Fahrzeughöhe (h) definierenden Fahrzeugdach (6), wobei die Fahrzeughöhe (h) kleiner als die Wagenhöhe (H) ist, wobei an einem heckseitigen Endbereich (B) des Fahrzeugkastens (2) ein Dachübergangselement (12) angeordnet ist, dessen Querschnittsprofil sich von seiner Vorderkante (16), welche einer Umrisslinie des Fahrzeugdachs (6) folgt, bis zu seiner Hinterkante (17), welche einer Umrisslinie des Wagendachs (11) folgt, erweitert, **dadurch gekennzeichnet, dass** das Dachübergangselement (12) aus einem Satz von mehreren, unterschiedlichen Eisenbahn-Wagen zugeordneten Dachübergangselementen (12) auswählbar ist, und das Dachübergangselement (12) demontierbar am Fahrzeugdach (6) befestigt ist.

2. Eisenbahn-Triebfahrzeug nach Anspruch 1, bei dem die Profilerweiterung des Dachübergangelementes (12) stetig ausgebildet ist.

3. Eisenbahn-Triebfahrzeug nach Anspruch 1 oder 2, bei dem die Profilerweiterung des Dachübergangelementes (12) glatt ausgebildet ist.

4. Eisenbahn-Triebfahrzeug nach einem der Ansprüche 1 bis 3, bei dem Anbauteile (18) und Anschlüsse (19) außerhalb des vom Dachübergangselement (12) überdeckten Endbereichs (B) des Fahrzeugkastens (2) angeordnet sind.

## Claims

1. Railway traction vehicle, in particular locomotive (1), for pulling at least one coupleable railway car which has a car body (10) with a car roof (11) defining a car height (h), comprising a vehicle body (2) with a vehicle roof (6) defining a vehicle height (h), wherein the vehicle height (h) is lower than the car height (H), wherein a roof transition element (12) is arranged on a rear-side end region (B) of the vehicle body (2), the cross-sectional profile of which roof transition element expands from its front edge (16), which follows a contour line of the vehicle roof (6), as far as its rear edge (17), which follows a contour line of the car roof (11), **characterized in that** the roof transition element (12) is selectable from a set of a plurality of roof transition elements (12) assigned to different railway cars, and the roof transition element (12) is fastened removably to the vehicle roof (6).

2. Railway traction vehicle according to Claim 1, in which the profile expansion of the roof transition element (12) is designed to be continuous.

3. Railway traction vehicle according to Claim 1 or 2, in which the profile expansion of the roof transition element (12) is designed to be smooth.

4. Railway traction vehicle according to one of Claims 1 to 3, in which accessory parts (18) and connections (19) are arranged outside that end region (B) of the vehicle body (2) which is covered by the roof transition element (12).

## Revendications

1. Véhicule de traction ferroviaire, en particulier locomotive (1), destiné à tirer au moins un wagon de chemin de fer qui peut venir s'y accoupler, qui présente une superstructure de wagon (10) munie d'un toit de wagon (11) définissant une hauteur de wagon (H), comprenant une superstructure de véhicule (2) munie d'un toit de véhicule (6) définissant une hauteur de véhicule (h) ; dans lequel la hauteur de véhicule (h) est inférieure à la hauteur de wagon (H) ; dans lequel un élément de transition de toit (12) est disposé contre une zone terminale (B) du côté arrière de la superstructure de véhicule (2), dont le profil en section transversale s'élargit à partir de son bord avant (16), qui suit une ligne de contour du toit (6) du véhicule, jusqu'à son bord arrière (17), qui suit une ligne de contour du toit (11) du wagon ; **caractérisé en ce que** l'élément de transition de toit (12) peut être sélectionné à partir d'un jeu de plusieurs éléments de transition de toits (12) attribués à différents wagons de chemin de fer, et l'élément de transition de toit (12) est fixé contre le toit (6) du véhicule de manière à pouvoir être démonté.

2. Véhicule de traction ferroviaire selon la revendication 1, dans lequel l'élargissement du profil de l'élément de transition de toit (12) est réalisé en continu.

3. Véhicule de traction ferroviaire selon la revendication 1 ou 2, dans lequel l'élargissement du profil de l'élément de transition de toit (12) est réalisé pour être lisse.

4. Véhicule de traction ferroviaire selon l'une quelconque des revendications 1 à 3, dans lequel des panneaux mobiles (18) et des attelages (19) sont disposés à l'extérieur de la zone terminale (B) de la superstructure (2) du véhicule, recouverte par l'élément de transition de toit (12).
